# EUROPÄISCHE PATENTSCHRIFT

(11) **EP 1 899 715 B1**
(45) Veröffentlichungstag und Bekanntmachung des Hinweises auf die Patenterteilung: **29.04.2009**
(21) Anmeldenummer: 06763913.8
(22) Anmeldetag: 28.06.2006
(51) Int. Cl.: G01N 24/10

(54) **VERFAHREN ZUR UNTERSUCHUNG VON LIPOSOMEN**
METHOD FOR THE ANALYSIS OF LIPOSOMES
PROCEDE D'ANALYSE DES LIPOSOMES

(30) Priorität: 01.07.2005 DE 102005031206
(43) Veröffentlichungstag der Anmeldung: 19.03.2008
(73) Patentinhaber: ROVI Cosmetics International GmbH, 36381 Schlüchtern (DE); Gematria Test Lab GmbH, 13187 Berlin (DE)
(72) Erfinder: BLUME, Gabriele, 36396 Steinau a. d. Strasse (DE); SACHER, Michael, 36381 Schlüchtern (DE); TEICHMÜLLER, Dirk, 63589 Linsengericht (DE); JUNG, Katinka, 13187 Berlin (DE)
(74) Vertreter: Seiffert, Klaus
(86) Internationale Anmeldenummer: PCT/EP2006/063614
(87) Internationale Veröffentlichungsnummer: WO 2007/003538

(56) Entgegenhaltungen:
- SULKOWSKI W W ET AL: "The influence of temperature, cholesterol content and pH on liposome stability" JOURNAL OF MOLECULAR STRUCTURE, ELSEVIER, AMSTERDAM, NL, Bd. 744-747, 3. Juni 2005 (2005-06-03), Seiten 737-747, XP004892276 ISSN: 0022-2860
- YARKOV S P ET AL: "Change in the permeability of phospholipid liposome membranes on exposure to preparations of the [delta]-endotoxins of Bacillus thuringiensis" BIOPHYSICS UK, Bd. 38, Nr. 4, 1993, Seiten 695-700, XP009072761 ISSN: 0006-3509
- NARDI A ET AL: "Industrial production and quality control of two liposome gels: Size, size distribution and stability" JOURNAL OF LIPOSOME RESEARCH 1993 UNITED STATES, Bd. 3, Nr. 3, 1993, Seiten 535-541, XP009072838 ISSN: 0898-2104
- EDWARDS KATIE A ET AL: "Analysis of liposomes" TALANTA, Bd. 68, Nr. 5, Februar 2006 (2006-02), Seiten 1432-1441, XP005267485 ISSN: 0039-9140
- SMISTAD G ET AL: "CRYO-ELECTRON MICROSCOPY OF FULLY-HYDRATED LIPOSOMES AS A QUALITY CONTROL METHOD" MICRON AND MICROSCOPICA ACTA, Bd. 22, Nr. 1-2, 1991, Seiten 85-86, XP002400470 & ANNUAL MEETING OF THE SCANDINAVIAN SOCIETY FOR ELECTRON MICROSCOPY, OSLO, NORWAY, JUNE 12-14, 1991. ISSN: 0739-6260
- RUOZI BARBARA ET AL: "Atomic force microscopy and photon correlation spectroscopy: Two techniques for rapid characterization of liposomes" EUROPEAN JOURNAL OF PHARMACEUTICAL SCIENCES, Bd. 25, Nr. 1, Mai 2005 (2005-05), Seiten 81-89, XP004861197 ISSN: 0928-0987

## Beschreibung

Die vorliegende Erfindung betrifft ein Verfahren zur qualitativen und/oder quantitativen Bestimmung der morphologischen Unversehrtheit und Intaktheit der Membran von Lipidvesikeln oder Liposomen in einem Testmedium, vorzugsweise einem flüssigen Testmedium.

### Hintergrund der Erfindung

Der Begriff "Liposom" stammt aus dem Griechischen und bedeutet "Fettkörperchen". Liposome sind sehr kleine, lichtmikroskopisch nicht sichtbare Hohlkugeln, die auch als Vesikel bezeichnet werden. Diese Vesikel bestehen aus einer oder mehreren Lipiddoppelschichten, die sich um einen wässerigen Kem lagern. Liposome werden sowohl in der Kosmetik als auch in der Pharmazie in erster Linie als Transportsysteme für Wirkstoffe verwendet. Darüber hinaus macht man sich in einigen Fällen auch die wirkstoffstabilisierende Wirkung von Liposomen zunutze. Des Weiteren werden Liposome oft auch aufgrund der kosmetisch und pharmazeutisch relevanten Eigenschaften der Vesikelbausteine selbst verwendet.

Das erste in der Literatur beschriebene Liposom bestand aus 'Phospholipiden [A.D. Bangham; Adv. Lipid Res.1, 65-104, 1963]. Auch heute bestehen die meisten Liposome aus Phospholipiden, wie z.B. die Nanosome. Zu den Liposomen zählen jedoch auch die speziellen Liposom-Typen Cerasome (Ceramide), Sphingosome (Sphingolipide) und Niosome (nicht-ionische Tenside) - alles "Fettkörperchen", die wegen der Verschiedenheit der Lipide ihrer Vesikelmembran unterschiedliche Eigenschaften aufweisen.

Am häufigsten werden Liposome aus Lecithin hergestellt, wobei normalerweise Lecithin verwendet wird, das aus der Sojapflanze oder aus Hühnereiem gewonnen wird. Der Begriff "Lecithin" kann hierbei für ein Gemisch aus Phospholipiden (PL), Ölen und anderen lipophilen Bestandteilen oder auch nur für die Phospholipidfraktion selbst stehen. In manchen Fällen bezeichnet das Wort "Lecithin" ein bestimmtes Phospholipid, das Phosphatidylcholin (PC). Alle Phospholipide bestehen aus einem lipophilen Teil (Fettsäuren) und einer hydrophilen Kopfgruppe, wobei Fettsäuren und Kopfgruppe über einen Abstandshalter, in der Regel Glycerol, verestert sind.

Die Stabilität von Liposomen, die aus Phospholipiden hergestellt sind, ist von ihrem Gehalt an Phosphatidylcholin sowie dessen Fettsäurezusammensetzung abhängig. Ein hoher Phosphatidylcholin-Gehalt (> 70%) erzeugt stabile Liposome in wäßrigen Formulierungen und in Gelen. Weiterhin kann die Stabilität erhöht werden, wenn hydriertes Phosphatidylcholin und/oder Cholesterol zur Herstellung der Vesikel eingesetzt wird.

Um die Wirksamkeit und Stabilität der aktiven Inhaltsstoffe von Liposomen zu erhöhen, werden in der Kosmetik und Pharmazie wirkstoffbeladene Liposome zusätzlich in Fertigformulierungen eingearbeitet. Dementsprechend gibt es mehrere verschiedene Liposomenpräparate bzw. - formulierungen, die auf dem Markt in Form von beispielsweise Sprays, Gelen, Emulsionen, Lotionen, Cremes, Salben etc. erhältlich sind. Insbesondere bei pharmazeutischen Präparaten stellt sich jedoch immer wieder die Frage nach der Stabilität und der Integrität, d.h. nach der morphologischen Unversehrtheit und Intaktheit der Vesikel in einer fertigen Formulierung. In dieser Hinsicht werden vor allem mögliche Interaktionen der Bestandteile der Fertigformulierung mit den Lipidvesikeln diskutiert.

Bekannt ist, daß Emulgatoren und oberflächenaktive Substanzen Lipidvesikel bzw. Liposome solubilisieren können. Durch diese Solubilisierung wird die Membranstruktur der Vesikel gestört, was dazu führt, daß die morphologische Unversehrtheit der Membranen nicht mehr gewährleistet ist, und die Vorteile der vesikulären Verkapselung der Wirkstoffe beeinträchtigt oder gar aufgehoben werden. Solche Interaktionen zwischen verschiedenen oberflächenaktiven Substanzen und Liposomen in wäßriger Lösung werden z.B. in einem Artikel von J. T. Simonnet beschrieben [J.T. Simonnet; Cosmetics & Toiletries Magazin 109, 45-52, 1994].

In dem vorgenannten Artikel von Simonnet wird im übrigen auch ein protektiver Einfluß von verschiedenen Verdickern (Biopolymeren) erwähnt. Demnach können die unterschiedlichen funktionellen Bestandteile einer Formulierung die Stabilität und damit auch die Integrität der Lipidvesikel/Liposomen nicht nur negativ sondern auch in positiver Weise beeinflussen.

Der Stellenwert der Erforschung und Beurteilung der positiven und/oder negative Interaktionen von Lipidvesikeln/Liposomen mit Formulierungsbestandteilen steigt unaufhaltsam mit dem Bedarf an hochwertigen kosmetischen und pharmazeutischen Formulierungen. Im Hinblick auf die Wirksamkeit und Effizienz kosmetischer und pharmazeutischer Formulierungen ist daher die Entwicklung und Etablierung einer analytischen Methode zur Untersuchung der Stabilität und Integrität bzw. der morphologischen Unversehrtheit und Intaktheit von Lipidvesikeln/Liposomen in kosmetischen bzw. pharmazeutischen Formulierungen von großer Bedeutung.

Nach bisherigem Stand der Technik ist jedoch eine quantitative Bestimmung der Stabilität und Integrität bzw. der morphologischen Unversehrtheit und Intaktheit von Lipidvesikel/Liposomen in einer kosmetischen oder pharmazeutischen Fertigformulierung nicht oder nur sehr unzureichend möglich.

Lediglich eingeschränkte Aussagekraft besitzen in diesem Zusammenhang in diesem Bereich anwendbare analytische Methoden wie die Elektronenmikroskopie (EM), statische und dynamische Lichtstreuungsexperimente (SLS, DLS) sowie die asymmetrische Feld-Fluß-Fraktionierung (AFFF).

Bei EM-Untersuchungen an Gefrierbrüchen kosmetischer und pharmazeutischer Formulierungen ist es zwar möglich, Lipidvesikel/Liposomen zu detektieren und die abgebildeten Vesikel auch hinsichtlich ihrer Struktur (morphologischen Unversehrtheit) und im Idealfall auch ihrer Größe zu beurteilen, doch gelingt es mit diesem Verfahren nicht, den Gehalt bzw. den Anteil von unversehrten und intakten Lipidvesikeln/Liposomen in einer Fertigformulierung quantitativ zu bestimmen. Ein weiterer großer Nachteil dieser Methode besteht in dem enormen experimentellen und apparativen Aufwand. Zudem ist die Aussagekraft der EM-Ergebnisse besonders stark von der experimentellen und interpretatorischen Erfahrung des Experimentators abhängig.

SLS- und DLS-Experimente, wie etwa die Photonenkorrelationsspektroskopie (PCS), werden in der kosmetischen und pharmazeutischen Industrie herangezogen, um Lipidvesikel/Liposomen hinsichtlich ihrer Größe und Größenverteilung zu beurteilen. Diesem Verfahren kommt in der Produktentwicklung aber auch in der Qualitätskontrolle von Lipidvesikeln/Liposomen große Bedeutung zu. Dabei werden jedoch im allgemeinen sehr stark verdünnte Lipidvesikel-/Liposomen-Emulsionen vermessen und nicht eine handelsübliche Fertigformulierung.

Da man bei SLS- und DLS-Verfahren in der Regel mit sehr hohen Verdünnungen der Uritersuchungslösungen arbeiten muß und die durchgeführten Beugungsexperimente bei Anwesenheit von größeren Vesikeln, z.B. Fetttröpfchen aus einer Cremeformulierung, stark beeinflußt und verfälscht werden, sind diese Methoden zur quantitativen und qualitativen Untersuchung der morphologischen Unversehrtheit und Intaktheit von Lipidvesikeln/Liposomen in kosmetischen bzw. pharmazeutischen Formulierungen nicht geeignet.

Selbst Geräteneuentwicklungen, die mit dynamischer Lichtrückstreuung arbeiten, z.B. Horiba LB-550 V (Retsch Technology GmbH, Deutschland) oder Zetasizer Nano Serie (Malvem Instruments Ltd., Großbritannien) erlauben zwar unter optimalen Bedingungen eine Teilchencharakterisierung von Lipidvesikeln/Liposomen-Emulsionen in Konzentrationen von 20% bis maximal 40%. Untersuchungen an unverdünnten Proben sowie quantitative Aussagen sind jedoch auch hier nicht realisierbar.

Ähnlich stellt sich die Problematik bei der Anwendung der AFFF zur quantitativen und qualitativen Untersuchung morphologischen Unversehrtheit und Intaktheit von Lipidvesikeln/Liposomen in kosmetischen bzw. pharmazeutischen Formulierungen dar. Mit diesem Verfahren gelingt es, Vesikel unterschiedlicher Größendimensionen, z.B. Lipidvesikel/Liposomen und Fetttröpfchen aus einer Cremeformullerung, zu separieren und danach unabhängig voneinander im Hinblick auf ihre Größen und auf die Größenvertellung zu analysieren. Hierbel müssen sich die zu bestimmenden Lipidvesikel/Liposomen hinsichtlich der Größe stark von den Öltröpfchen der Formullerung unterscheiden, damit es nicht zu einer Überlappung der verschiedenen Parameter kommt

Selbst quantitative Aussagen sind mit dem AFFF-Verfahren möglich. Jedoch müssen auch hier bei der Probenvorbereitung entsprechende Verdünnungsschritte vorgenommen werden, die nicht nur die physikalischen Eigenschaften der kosmetischen oder pharmazeutischen Formulierung, z.B. Viskosität Rheologie, Transparenz, etc., modifizieren, sondern auch die physikalische und chemische Umgebung der Lipidvesikel/Liposomen stark verändern. Man kann davon ausgehen, daß sich unter diesen Bedingungen die Lipidvesikel/Liposomen sogar strukturell reorganisieren können. Auch diese experimentellen Ergebnisse reflektieren somit nicht mehr den ursprünglichen Zustand der Lipidvesikel/Liposomen in einer kosmetischen oder pharmazeutischen Fertigformulierung.

Nardi A. beschreibt in "Industrial Production and Quality Control of two Liposome Gels: Size, Size Distribution and Stability" (Journal of Uposome Research, 3(3), 1993, S. 535-541) die Qualitätskontrolle von Liposomen im Hinblick auf Größe, Größenverteilung und Stabilität mit elektronenmikroskopischen, durchflußzytometrischen und Coulter-Verfahren.

Sulkowski, W.W. et al., beschreiben in "The influence of temperature, cholesterol content and pH on liposome stability" (Journal of Molecular Structure, 744-747, 2005, S. 737-747) Untersuchungen zum Einfluß von Temperatur, Cholesteringehalt und pH-Wert auf die Liposomenstabilität, bei denen die ESR-aktive Sonde 5-DOXYL in die Liposomen eingebracht wird und anschließend ein Elektronenspinresonanzspektrum von einer Lösung der Liposomen aufgezeichnet wird. Aus dem Elektronenspinresonanzspektrum werden die qualitativen Stabilitätsparameter 2*A*ₘₐₓ, *S* und T berechnet Daneben wird der Einfluß von Temperatur und Cholesteringehalt auf den Kurvenverlauf der Elektronenspinresonanzspaktren diskutiert.

Yarkov, S.P. et al. beschreiben in "Charge in the Permeability of Phospholipid Liposome Membranes on Exposure to Preparations of the δ-Endotoxins of Bacillus thuringlensis" (Biophysics, Vol. 38, Nr. 4, 1993, S. 695-700) Untersuchungen zur Stabilität von Liposomenmenbranen, die Endotoxinen von *Bacillus thuringlensis* ausgesetzt sind. Bei diesen Untersuchungen werden bestimmte Stabilitätsparameter aus ESR-Spektren von mit ESR-aktiven Sonden präparierten Liposomenmembranen ermittelt.

### Aufgabe der Erfindung

Die Aufgabe der Erfindung bestand daher darin, ein Verfahren zur Bestimmung der morphologischen Unversehrtheit und Intaktheit von Lipidvesikeln/Liposomen in verschiedenen Medien, insbesondere in kosmetischen/pharmazeutischen Fertigformulierungen bereitzustellen, das unabhängig von den physikalisch-chemischen Eigenschaften der Medien angewendet werden kann und für das keine Verdünnungsschritte notwendig sind.

### Beschreibung der Erfindung

Die erfindungsgemäße Aufgabe wird gelöst durch ein Verfahren zur quantitativen Bestimmung der morphologischen Unversehrtheit und Intaktheit der Membran von Lipidvesikeln oder Liposomen in einem Testmedium, vorzugsweise einem flüssigen Testmedium, unter Anwendung der Elektronenspinresonanz-(ESR)-Spektroskopie, bei dem man den prozentualen Anteil der unversehrten bzw. intakten Lipidvesikel/Liposomen in dem Testmedium, vorzugsweise einem flüssigen Testmedium, bestimmt, indem man
a) die zu untersuchenden Lipidvesikel/Liposomen mit einer ESR-aktiven Sonde markiert,
b) eine Probe herstellt, indem man eine Menge der markierten Lipidvesikel/Liposomen in das Testmedium einbringt,
c) eine Positivkontrolle herstellt, indem man eine Menge der markierten Lipidvesikel/Liposomen in ein Kontrollmedium einbringt, wobei man bei der Positivkontrolle davon ausgeht, daß bei ihr 100% der Lipidvesikel bzw. Liposomen intakt sind,
d) eine Negativkontrolle herstellt, indem man eine Menge der ESR-aktiven Sonde in das Testmedium einbringt,
e) ESR-Spektren von Probe, Positivkontrolle und Negativkontrolle aufnimmt und
f) die aufgenommenen ESR-Spektren miteinander vergleicht, wobei man
   i) aus den Spektren von Probe und Positivkontrolle und aus den Spektren von Probe und Negativkontrolle Differenzspektren bildet und/oder
   ii) ein simuliertes Spektrum berechnet, indem man einen prozentualen Anteil der Werte des Spektrums der Positivkontrolle und einen prozentualen Anteil der Werte des Spektrums der Negativkontrolle unter Erhalt des simulierten Spektrums addiert, wobei die prozentualen Anteile zusammen 100% ergeben, und das simulierte Spektrum mit dem experimentellen Spektrum der Probe vergleicht.

Das erfindungsgemäße Verfahren dient zur Bestimmung der morphologischen Unversehrtheit und Intaktheit der Membran von Lipidvesikeln oder Liposomen in einem Testmedium, vorzugsweise einem flüssigen Testmedium.

Als Testmedien kommen alle Materialien in Betracht, in die Lipidvesikel/Liposome zur Forschung, Entwicklung oder zur Anwendung eingearbeitet werden können, insbesondere flüssige Medien. Unter dem Begriff "flüssiges Testmedium" werden im Sinne dieser Erfindung niedrigviskose bis hochviskose flüssige Medien verstanden, wie unter anderem alle möglichen kosmetischen oder pharmazeutischen Fertigformulierungen, wie z.B. Öl-in-Wasser- und Wasser-in-Öl-Emulsionen, Hydrogele, wie z.B. Carbomer-Gele oder Alginat-Gele, und komplexe Salben, Pasten, Cremes oder Lotionen aus vielen verschiedenen Komponenten, einschließlich Konservierungsstoffen, Stabilisatoren etc.. Die eingearbeiteten Lipidvesikel und/oder Liposome in der Matrix können beispielsweise gelöst oder eingebettet vorliegen, wobei mit dem erfindungsgemäßen Verfahren bestimmt werden kann, inwieweit die in dem Testmedium gelösten, eingebetteten oder in anderer Weise vorliegenden Vesikel unversehrt und intakt sind.

Unter "Lipidvesikel/Liposome" werden im Sinne dieser Erfindung sowohl Doppelschichtmembranvesikel als auch mehrschichtige Vesikel verstanden, wobei die Wirkstoffe sowohl im Innenraum der Vesikel in einer Lösung sowie auch in oder zwischen den Schichten eingelagert vorliegen können. Darüber hinaus werden hierunter auch einschichtige Vesikel, sogenannte Nanopartikel, verstanden.

Die Membran von Lipidvesikeln und/oder Liposomen ist morphologisch dann nicht mehr unversehrt, wenn die Vesikelmembran von einem Medium bzw. Stoffen in einem Medium (z.B. Emulgatoren, oberflächenaktive Substanzen) so beeinträchtigt wird, daß sich die Vesikel beispielsweise auflösen oder einzelne Membranbestandteile aus dem Membranverband herausgelöst werden (z.B. durch Herauslösen von Membranbausteinen oder von in die Membran integrierten Wirkstoffen oder Abschnürungen von Membranabschnitten).

Eine Vesikelmembran ist auch dann nicht mehr unversehrt, wenn die Fluidität der Membran so stark erhöht wird, so daß (vorübergehend) Poren in der Membran entstehen, durch die möglicherweise Medium in die Vesikel eindringen kann und/oder Material aus dem Vesikelinneren nach außen, d.h. in das Medium, gelangen kann.

Eine in dieser Weise beeinträchtigte Membran ist dann auch nicht mehr intakt, da es gerade die Funktion der Vesikel ist, den Innenraum gegenüber dem Äußeren abzugrenzen und anders herum (vesikuläre Verkapselung). Eine Vesikelmembran ist aber auch dann nicht mehr intakt, wenn die Membran nach außen hin unversehrt scheint, weil weder eine Auflösung der Vesikel, noch Abschnürungen oder Poren feststellbar sind, und trotz der scheinbaren Unversehrtheit die Fluidität der Membran so stark erhöht wird, daß die Barriereeigenschaften der Membran so beeinträchtigt werden, daß sich Medien- oder Wirkstoffmoleküle durch die äußerlich unversehrte Membran hindurch bewegen können oder einzelne Membran- oder Wirkstoffmoleküle aus der Membran herausgelöst werden.

Die vorliegende Erfindung stellt ein Verfahren bereit, bei dem die Intaktheit und Unversehrtheit von Vesikelmembranen unter Anwendung der Elektronenspinresonanz-(ESR)-Spektroskopie bestimmt wird.

Die Elektronenspinresonanz-(ESR)-Spektroskopie basiert auf der Absorption von Mikrowellenstrahlung durch eine paramagnetische Probe, die in einem magnetischen Feld orientiert ist. Sie eignet sich als eine spektroskopische Methode zur Untersuchung von physiko-chemikalischen Prozessen von Biomembranen und artifiziellen Membranen. Die Technik der Spinmarkierung (Spinlabelling; *spin labelling*) ertaubt die Charakterisierung von Membraneigenschaften, wie Fluidität und Mobilität, und die Charakterisierung von Interaktionen zwischen lipophilen Molekülen und den Membranlipiden. Hierzu werden der Probe paramagnetisch markierte und damit ESR-aktive Sonden zugesetzt, die in der Regel den Lipiden der zu untersuchenden Membran analoge Moleküle darstellen. Größtenteils handelt es sich hierbei um Fettsäuren, Ester, Phospholipide, Cholesterole und deren Derivate, die mit einer paramagnetischen, ESR-aktiven Gruppe, wie beispielsweise einer Doxyl-Gruppe (2,2-disubstituierte 4,4-Dimethyl-3-oxazolidinyloxyl-Gruppe), versehen sind. Die vorgenannten ESR-aktiven Sonden sind teilweise auch kommerziell erhältlich. Beispiele für erfindungsgemäß geeignete ESR-aktive Sonden sind 1-Palmitoyl-2-(n-doxyl)-stearoyl-glycero-3-phosphocholine, wobei n = 5, 7, 10, 12, 14 oder 16, vorzugsweise n = 5 ist. Alternative ESR-aktive Sonden, die zur Ausführung des erfindungsgemäßen Verfahrens geeignet sind, sind Doxyl-5-Cholesterol oder ein Methylester davon und n-Doxyl-Fettsäuren oder ein Methylester davon, wobei vorzugsweise n = 5 oder 16 ist.

Die Spinmarkierungen können in Form von ESR-aktiven Sonden mit unterschiedlichen Methoden in die Membranen eingebracht werden. Im Falle von artifiziellen Membranen kann eine Spinmarkierung beispielsweise zu den Lipiden zugefügt werden bevor die Membranen hergestellt werden (*prelabelling*). Dieser Weg führt zu einer sofortigen homogenen Verteilung der Moleküle der Spinmarkierung innerhalb der Membranen. Alternativ können Membranen auch nachträglich markiert werden, entweder durch die Zugabe der ESR-aktiven Sonde zur Zell- oder Liposomensuspension in einer geeigneten Lösung oder durch langsame Aufnahme der ESR-aktiven Sonde aus Festform durch Solubilisierung (*post-*/*abelling*). Im Falle des *post-labelling* müssen sehr geringe Konzentrationen an ESR-aktiver Sonde verwendet werden, damit sich eine homogene Verteilung der Sonde innerhalb der Membranen einstellen kann.

Eine Lipidmembran ist ein geordnetes, fluides System, in dem die Moleküle der ESR-aktiven Sonde nur eingeschränkte Freiheitsgrade in ihrer Mobilität haben. Das spiegelt sich in der hohen Anisotropie der Spektralform wieder, die somit ein strukturiertes ESR-Signal zur Folge hat. Jede Störung des geordneten Systems der Lipidmembran führt zu Veränderungen in der Orientierung, der Umgebung und der Mobilität der ESR-aktiven Sonde, was sich wiederum in der Form von Veränderungen des ESR-Signals niederschlägt.

Die anisotrope Bewegungsfreiheit der ESR-aktiven Sonde in einer Membran läßt sich durch den Ordnungsparameter S₃₃ beschreiben, der einen Wert zwischen 0 und 1 einnehmen kann. Je größer der Ordnungsparameter S ist, desto geordneter und rigider ist eine Membran. Die Fluidität einer Membran wird durch die Korrelationszeit τ_{R} beschrieben. Die Korrelationszeit ist die Zeit, in der sich die ESR-aktive Sonde um die eigene Längsachse drehen kann. In Membranen beträgt τ_{R} ca. 10⁻⁸-10⁻⁹ Sekunden. Es gilt: je niedriger die Korrelationszeit ist, desto fluider ist eine Membran.

Eine Simulierung der Spektralform über die quantenmechanischen Parameter erlaubt die Quantifizierung des Ordnungsparameters S₃₃ und der Korrelationszeit τ_{R} der ESR-aktiven Sonden innerhalb einer bestimmten Membran. Diese Art der Auswertung bedarf eigener Simulierungs- oder Fittingprogramme (NNSL, Freed & Schneider).

Für das Verfahren der vorliegenden Erfindung sind die Mobilitätsparameter jedoch nicht von primärem Interesse. Vielmehr soll anhand der spektralen Form festgestellt werden können, wie viele Lipidvesikel/Liposome in einem bestimmten Testmedium, beispielsweise in einer bestimmten kosmetischen/pharmazeutischen Formulierung, unversehrt und intakt sind und wie hoch der Anteil der Lipidvesikel/Liposome ist, bei denen dies nicht mehr der Fall ist.

Bei dem erfindungsgemäßen Verfahren werden zuerst die zu untersuchenden Lipidvesikel/Liposomen mit einer ESR-aktiven Sonde markiert. Anschließend werden die markierten Lipidvesikel/Liposome in verschiedene Medien eingearbeitet, nämlich zumindest in ein Kontrollmedium für eine Positivkontrolle und in ein Testmedium, dessen Einfluß auf die morphologische Unversehrtheit und Intaktheit der Lipidvesikel/Liposomen untersucht werden soll.

Mit den markierten Lipidvesikeln/Liposomen wird zunächst das liposomale System als solches charakterisiert und ein ESR-Spektrum einer Positivkontrolle (Positivspektrum) definiert, wobei man bei der Positivkontrolle davon ausgeht, daß bei ihr der Zustand verwirklicht ist, in dem 100 % der Lipidvesikel/Liposome intakt sind. Für die Herstellung der Positivkontrolle wird eine Menge der markierten Lipidvesikel/Liposome in ein entsprechendes Kontrollmedium eingebracht. Vorzugsweise ist das Kontrollmedium eine wäßrige Lösung, besonders bevorzugt reines Wasser, da für das Medium Wasser bekannt ist, daß es die Lipidvesikel/Liposomen nicht stört oder beeinträchtigt, sondern vielmehr stabilisiert, und man daher davon ausgehen kann, daß die Lipidvesikel/Liposome in wäßriger Emulsion zu 100% stabil, d.h. unversehrt und intakt sind.

In einem weiteren Ansatz werden die interessierenden Lipidvesikel/Liposome in ein zu untersuchende Testmedium eingearbeitet. Das Testmedium kann, wie zuvor bereits erläutert, z.B. ein Gel, eine Creme, eine Salbe oder irgendeine andere kosmetische oder pharmazeutische Formulierung sein, in die die interessierenden Lipidvesikel/Liposome für eine Anwendung eingearbeitet werden könnten oder sollen. Von der hierdurch gewonnenen Probe wird dann ein ESR-Spektrum (Probenspektrum) aufgenommen.

Des weiteren wird eine Negativkontrolle hergestellt, indem man eine Menge der ESR-aktiven Sonde In das zu untersuchende Testmedium einbringt und auch von der Negativkontrolle ein ESR-Spektrum aufnimmt und in den Vergleich einbezieht. Da die Negativkontrolle keine Lipidvesikel/Liposome, sondern nur freie, mobile Sonde enthält, entspricht sie 0% intakten bzw. unversehrten Lipidvesikeln/Liposomen in dem Testmedium.

Zur Bestimmung der morphologischen Unversehrtheit und Intaktheit der Membran der Lipidvesikel/Liposome in dem Testmedium werden die aufgenommenen ESR-Spektren miteinander verglichen. Je nach angewendetem Vergleichsverfahren ist eine qualitative oder eine quantitative Bestimmung der Unversehrtheit und Intaktheit möglich.

Bei der qualitativen Bestimmung wird beurteilt, ob das Probenspektrum mit dem Positivspektrum vollständig oder nahezu vollständig übereinstimmt oder stark davon abweicht. Bei weitgehender Übereinstimmung kann man davon ausgehen, daß alle oder nahezu alle Lipidvesikel/Liposome in dem Testmedium intakt sind. Dies reicht in einigen Fällen aus, um beurteilen zu können, ob das Testmedium für die verwendeten Lipidvesikel/Liposome geeignet ist, insbesondere in solchen Fällen, in denen eine deutliche Übereinstimmung zwischen dem Probenspektrum und dem Positivspektrum vorliegt.

Wahtweise wird bei der qualitativen Bestimmung auch untersucht, ob das Probenspektrum mit dem Negativspektrum vollständig oder nahezu vollständig übereinstimmt oder stark davon abweicht. Bei festgestellter Übereinstimmung kann man davon ausgehen, daß keine oder nahezu keine Lipidvesikel/Liposome in dem Testmedium mehr intakt sind. Dies reicht in vielen Fällen aus, um feststellen zu können, ob das Testmedium für die verwendeten Lipidvesikel/Liposome ungeeignet ist.

Bei der quantitativen Bestimmung wird der prozentuale Anteil der unversehrten bzw. intakten Lipidvesikel/Liposome in der Matrix wie folgt bestimmt bzw. errechnet:

Vollständige Intaktheit der Vesikel liegt vor, wenn sich das Positivspektrum nicht signifikant vom Spektrum der Lipidvesikel/Liposome im Testmedium unterscheidet. Um dies zu ermitteln, werden Positivspektrum und Probenspektrum voneinander subtrahiert. Wenn die beiden Spektren sich nicht signifikant voneinander unterscheiden (ca. 100% Intaktheit), ist das Ergebnis dieser Subtraktion eine Basislinie, die jenseits des Grundrauschens keinerlei Intensität aufweist.

Keine Intaktheit der Vesikel, d. h. 0% Intaktheit, liegt vor, wenn sich das Negativspektrum nicht signifikant vom Spektrum der Lipidvesikel/Liposome in dem zu untersuchenden Testmedium unterscheidet. Um dies zu ermitteln werden Negativspektrum und Probenspektrum voneinander subtrahiert. Wenn die beiden Spektren sich nicht signifikant voneinander unterscheiden (ca. 0% Intaktheit), ist das Ergebnis dieser Subtraktion eine Basislinie, die jenseits des Grundrauschens keinerlei Intensität aufweist.

Liefert weder die Korrelation der Positiv- noch der Negativspektren mit dem Probenspektrum eine Basislinie, die jenseits des Grundrauschens keinerlei Intensität aufweist, d.h. unterscheiden sich sowohl Positiv- als auch Negativkontrolle vom Probenspektrum signifikant, so wird erfindungsgemäß für die Quantifizierung, also für die Bestimmung des Anteils der unversehrten und intakten bzw. der nicht unversehrten und nicht intakten Lipidvesikel/Liposome, ein simuliertes Spektrum erstellt bzw. errechnet.

Das simulierte Spektrum wird hierfür aus verschiedenen prozentualen Anteilen der Werte der Spektren der Positivkontrolle und der Negativkontrolle zusammengesetzt, wobei die prozentualen Anteile der Spektren der Positivkontrolle und der Negativkontrolle so variiert werden, daß sich das simulierte Spektrum immer mehr dem experimentellen Probenspektrum annähert. Wenn die Signifikanz der Unterschiede zwischen dem simulierten Spektrum und dem experimentellen Probenspektrum bei oder unter p = 0,05 liegt, wird die Simulation als akzeptabel angenommen. Der prozentuale Anteil der Werte des Spektrums der Positivkontrolle am simulierten Spektrum gibt dann den prozentualen Anteil der morphologisch unversehrten bzw. intakten Lipidvesikel/Liposome in dem Testmedium wieder. Anders herum steht der prozentuale Anteil der Werte des Negativspektrums am simulierten Spektrum für den prozentualen Anteil der nicht unversehrten bzw. nicht intakten Lipidvesikel/Liposome in dem Testmedium.

Selbstverständlich können nach dem erfindungsgemäßen Verfahren Bestimmungen unter Einsatz von Referenzproben, die ein bekanntes Mengenverhältnis an intakten und nicht intakten Lipidvesikeln/Liposomen enthalten, durchgeführt werden. Der Vergleich des ESR-Spektrums der Referenz, die ein bekanntes Mengenverhältnis an intakten und nicht intakten Lipidvesikeln/Liposomen aufweist (z. B. 75% intakte, 25% nicht intakte Lipidvesikel/Liposome) mit demjenigen der Probe gibt Aufschluß darüber, ob die Intaktheit der Lipidvesikel/Liposome in der Probe derjenigen in der Referenz nahekommt und für eine geeignete Formulierung noch ausreicht oder ob sie die Referenz sogar übertrifft. Bei Verwendung mehrere Referenzproben, die unterschiedliche Mengenverhältnisse an intakten und nicht intakten Lipidvesikeln/Liposomen in Kontrollmedium aufweisen (z. B. 90% : 10%, 80% : 20%, 70% : 30% intakte : nicht intakte Lipidvesikel/Liposome), können bereits semiquantitative Aussagen getroffen werden.

Für den Fachmann auf dem Gebiet der ESR-Spektroskopie versteht es sich, daß es für die Vergleichbarkeit und die Auswertbarkeit verschiedener ESR-Spektren für die Probe und die Positiv- und Negativkontrollen wichtig ist, die Meßbedingungen so einzustellen, daß die Spektren ein vergleichbares bzw. einheitliches Signal-zu-Rauschen-Verhältnis aufweisen. Um dies zu erreichen führt man zweckmäßigerweise entsprechende Vorversuche durch, bei denen man verschiedene Konzentrationsverhältnisse und Mengen von ESR-aktiver Sonde, Lipidvesikeln/Liposomen und/oder Medium herstellt und die ESR-Meßparameter im Sinne eines einheitlichen Signal-zu-Rauschen-Verhältnisses anpaßt. Geringere Konzentrationen an ESR-aktiver Sonde können beispielsweise durch größere Verstärkung und höhere Akkumulationszahlen ausgeglichen werden. Mit diesem Verfahren kann überprüft werden, daß die ESR-aktive Sonde nicht aus den Lipsomen herausdiffundiert. Außerdem kann die Menge an Liposomen definiert werden, die maximal in eine kosmetische Formulierung eingebracht werden kann. Des weiteren ist es vorteilhaft, die Spektren auf einen einheitlichen Integralwert zu normieren, indem man die Integrale der einzelnen Spektren ermittelt und die Spektren normalisiert.

Weitere Merkmale und mögliche Merkmalskombinationen sowie die aus den weiteren Merkmalen und möglichen Merkmalskombinationen resultierenden Vorteile der vorliegenden Erfindung werden exemplarisch anhand der nachfolgenden Beispiele und Figuren dargestellt.

### Beispiele

### A - Markierung der Liposome

In Vorversuchen wurden Phosphatidylcholin-Liposome mit der Post-Labelling-Methode mit ESR-aktiver Sonde markiert, wobei zunächst verschiedene molare Verhältnisse von Sonde und Membranlipiden des jeweiligen Trägersystems hergestellt und vermessen wurden, bis eine optimale Konzentration der Sonde gefunden wurde, die stabile Spektren mit einem annehmbaren Signal-zu-Rauschen-Verhältnis lieferten.

Als ESR-aktive Sonde für die Spinmarkierung wurde 16:0-05 PC DOXYL (1-Palmitoyl-2-stearoyl-(5-doxyl)-*sn*-glycero-3-phosphocholin; Avanti Polar Lipids, Inc., Alabaster, AL, USA) verwendet. Zunächst wurde eine Lösung mit einer Konzentration von 4,6 mM der Sonde in 96%igem Ethanol hergestellt. Aus dieser Lösung wurde ein Volumen zu einem aliquoten Teil der zu untersuchenden Liposomen hinzugegeben, so daß die Endkonzentration der ESR-aktiven Sonde in der Liposomensuspension 0,2 mM betrug.

### B - Herstellung der Proben, der Positivkontrolle und der Negativkontrolle

Für die Proben wurden in die zu untersuchenden Testmedien markierte Liposome in einer Konzentration von 5 Gew.-% eingearbeitet. Für die Positivkontrolle wurden die markierten Liposome in einer Konzentration von 5 % Gew.-% in Wasser zu einer Suspension verarbeitet. Für die Negativkontrollen wurden jeweils 10 µM ESR-aktive Sonde in die verschiedenen Testmedien eingearbeitet. Die Homogenität der Proben wurde durch wiederholtes Rühren, gefolgt von kurzen Zentrifugationsschritten bei 350 x g für 6 Sek. erreicht.

Die Endkonzentration der ESR-aktiven Sonde in allen Proben betrug jeweils 10 µM.

### C - Messung der Spektren

Die ESR-Spektren der markierten Liposome in den Proben und der Positivkontrolle wurden (i) unmittelbar nach dem Einrühren der Liposome (t=0), (ii) nach 24 h bei Raumtemperatur (RT), (iii) nach 24 h bei RT plus 8 h bei 40°C, (iv) nach 14 Tagen bei RT, (v) nach 4 Wochen bei RT und (vi) nach 8 Wochen bei RT aufgenommen.

Für die Messungen wurden die jeweiligen Proben in eine Glas-Kapillarpipette (50 µl) eingesaugt, die Kapillarpipette mit Hämatokrit-Wachs verschlossen und das ESR-Spektrum aufgenommen. Alle Spektren wurden auf dem gleichen Gerät und mit den gleiche Meßparametern aufgenommen:

| | |
|---|---|
| Gerät: | ESR MS200 (Magnetech, Berlin) |
| Meßparameter: | 3360 G Mittelfeld, 100 G Scan-Breite, 10 mW Dämpfung, 20 Sek. *Sweep*-Zeit, 300 Verstärkung, 1 G Modulationsamplitude, 40 Akkumulationen |

### D - Qualitativer Vergleich der Spektren

Um zu ermitteln, ob sich das Positivspektrum signifikant von dem Spektrum der Liposome in dem jeweiligen Testmedium unterschied, wurden Positivspektrum und Probenspektrum jeweils voneinander subtrahiert. Das Ergebnis dieser Subtraktion ergab eine Basislinie, wenn die beiden Spektren sich nicht signifikant voneinander unterschieden.

### E - Quantitativer Vergleich der Spektren

Für die quantitative Bestimmung der Liposomenstabilität wurden die Spektren normiert, d.h. die einzelnen Spektren wurden durch die Intensität ihres Absorptionsspektrums geteilt. Für jede Auswertung wurden das Positivspektrum, das Negativspektrum und das experimentelle Probenspektrum (markierte Liposomen in einer Formulierung) übereinander projiziert. Bestand in der Probe eine heterogene Situation, d.h. war ein Teil der Liposomen in der Probe intakt und ein anderer Teil nicht intakt, so wich das entsprechende Probenspektrum sowohl von Positiv- als auch Negativspektrum ab. Durch Summierung prozentualer Anteile der Signale des Positivspektrums und des Negativspektrums ergab sich ein berechnetes (simuliertes) Spektrum, das durch Variieren der jeweiligen prozentualen Anteile dem Probenspektrum schrittweise angenähert wurde. Das bestmöglich angenäherte simulierte Spektrum wurde dann von dem experimentellen Spektrum subtrahiert. Wenn die Signifikanz der Unterschiede der einzelnen Signalbereiche unter p = 0,05 lag, wurde angenommen, daß die Simulation signifikant repräsentativ für die Prozentanteile der intakten und nicht intakten Liposome in der Probe war.

### F - Ergebnisse

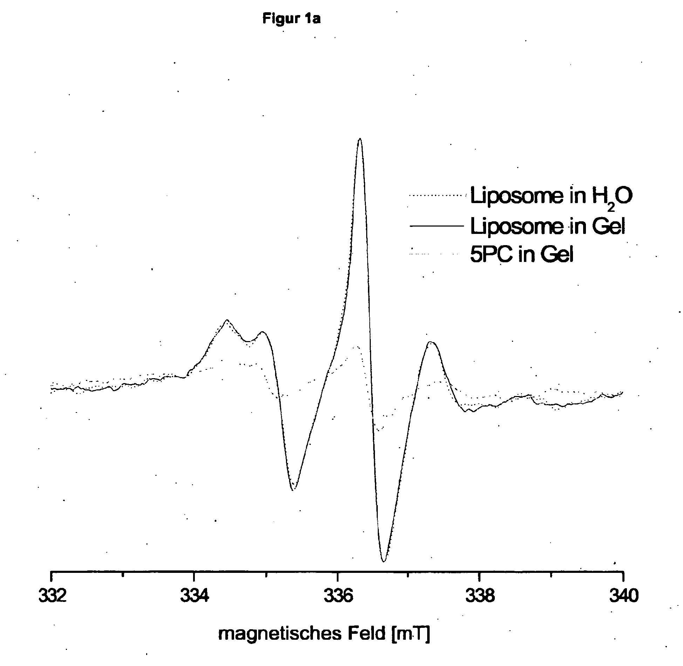

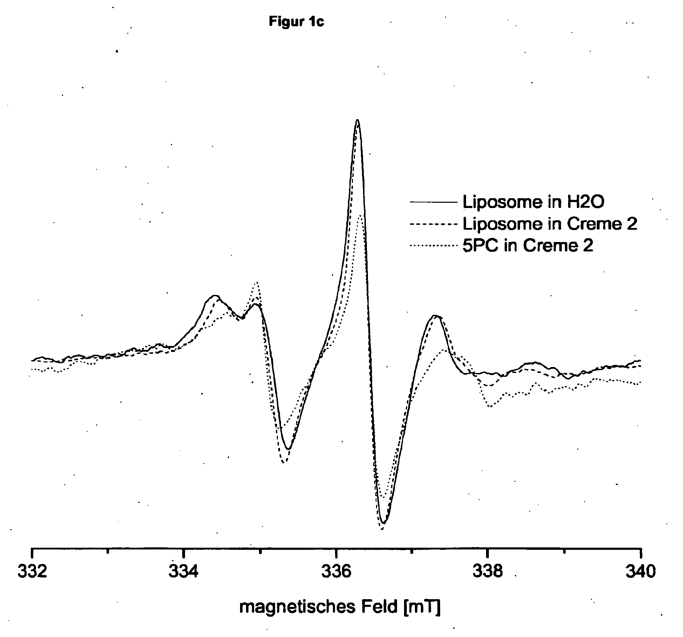

Die Figuren 1a bis 1d zeigen übereinander projizierte ESR-Spektren von Probe, Positivkontrolle und Negativkontrolle für verschiedene Testmedien (1a: Gel, 1b: Creme 1, 1c: Creme 2, 1d: Shampoo). Die ESR-Spektren sind wie oben beschrieben aufgenommen worden.
Figur 1a zeigt ein Spektrum der Liposome im Gel, wobei sich das Spektrum nicht signifikant vom Positivspektrum (Liposome in H₂O) unterscheidet. Dies ist ein Nachweis dafür, daß die Liposome in dem Gel unversehrt und intakt waren. Entsprechend ist das Spektrum der Liposome im Gel deutlich verschieden vom Negativspektrum der freien ESR-aktiven Sonde im Gel (16:0-05 PC DOXYL in Gel).

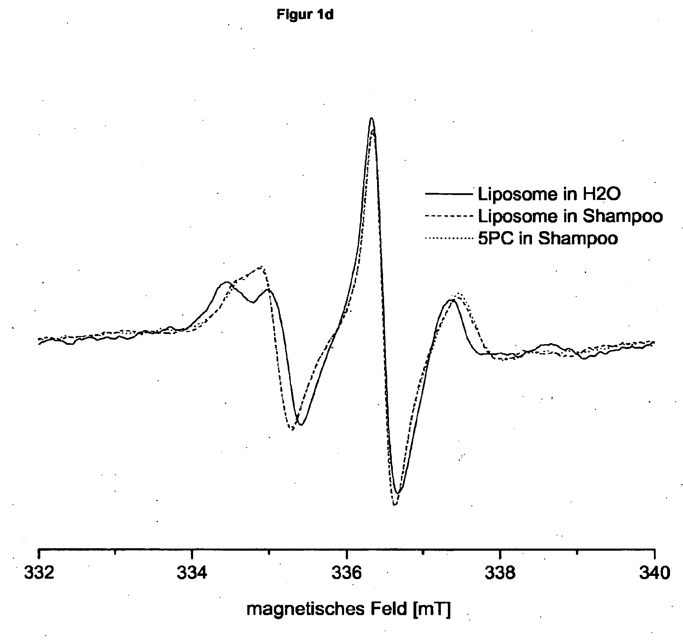

Figur 1d zeigt ein Beispiel für ein Testmedium, nämlich Shampoo, in dem die Liposome instabil, d.h. nicht unversehrt und nicht intakt, sind. Entsprechend unterscheidet sich das Spektrum der Liposome im Shampoo nicht signifikant vom Negativspektrum (16:0-05 PC DOXYL in Shampoo).

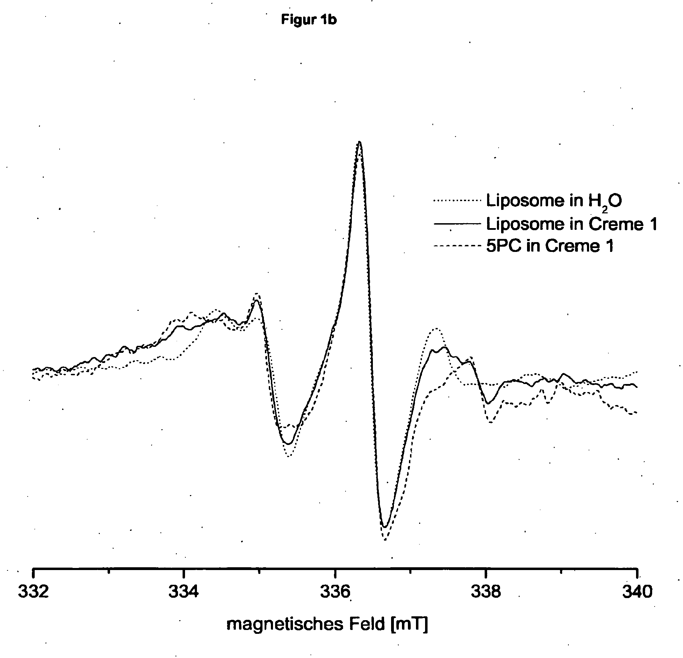

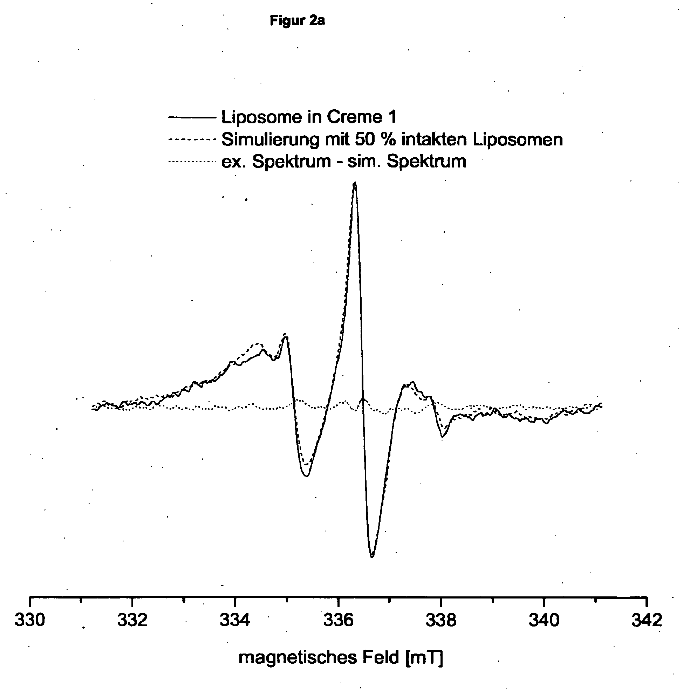

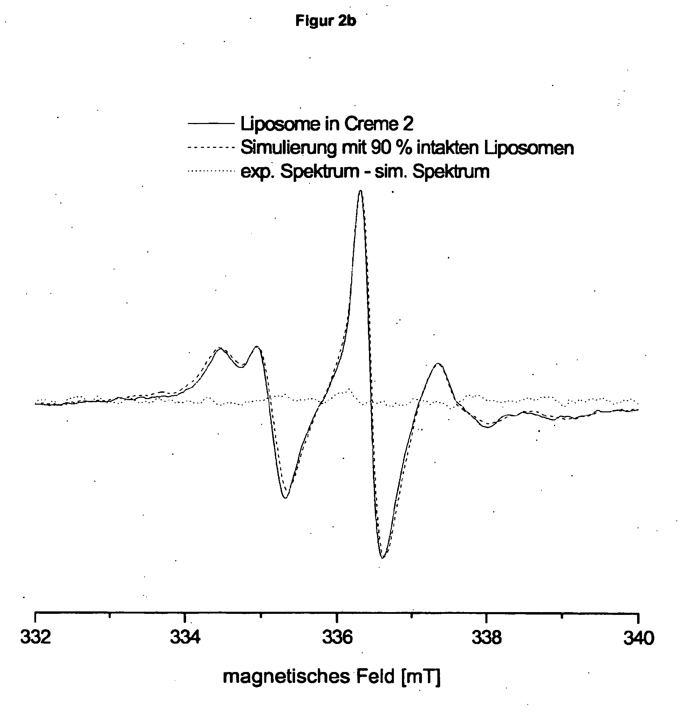

Figuren 1b (Creme 1) und 1c (Creme 2) zeigen intermediäre Situationen, in denen sich die Spektren der Liposome in den Cremes signifikant vom Positivspektrum und von den jeweiligen Negativspektren unterscheiden. Es wurden daher zur quantitativen Bestimmung der Prozentanteile der intakten und nicht intakten Liposome in den Proben unterschiedliche prozentuale Anteile der Positiv- und Negativspektren summiert, bis sich das jeweils resultierende simulierte Spektrum nicht mehr signifikant vom experimentellen Spektrum unterschied. Figuren 2a und 2b zeigen die Ergebnisse dieser Simulationen für die Testmedien Creme 1 bzw. Creme 2.

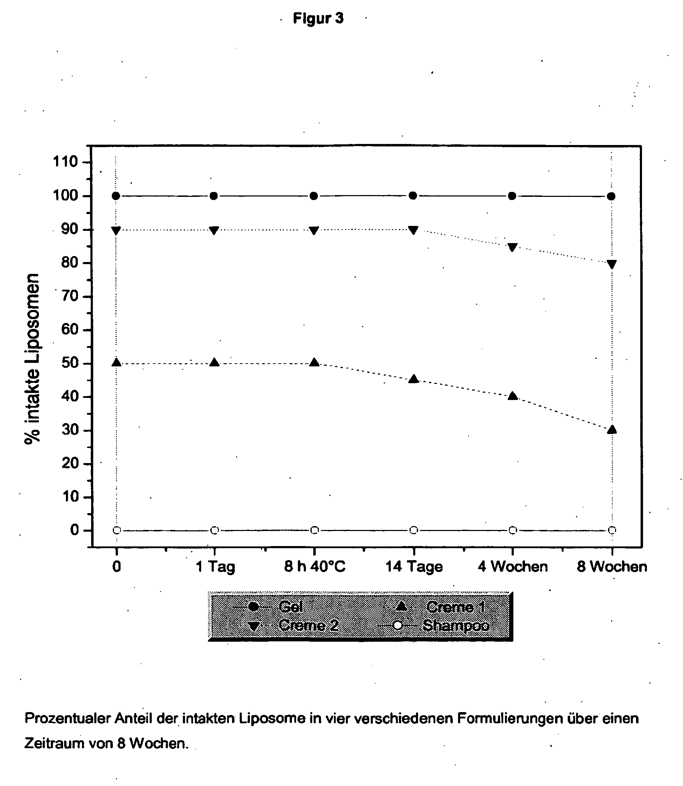

Dieses Verfahren wurde auf die Spektren der Liposome in allen Testmedien (i) unmittelbar nach dem Einrühren der Liposome (t=0), (ii) nach 24 h bei Raumtemperatur (RT), (iii) nach 24 h bei RT plus 8 h bei 40°C, (iv) nach 14 Tagen, (v) nach 4 Wochen und (vi) nach 8 Wochen angewendet. Die Ergebnisse sind in Tabelle 1 zusammengefaßt und in Figur 3 graphisch dargestellt.

**Tabelle 1: Prozentualer Anteil der intakten Liposomen in vier verschiedenen Formulierungen über einen Zeitraum**

| **Formulierung** | **% intakte Liposome** | | | | |
|---|---|---|---|---|---|
| | **t = 0** | **nach 24 h + 8 h 40 °C** | **nach 14 Tagen** | **nach 4 Wochen** | **nach 8 Wochen** |
| Gel ¹⁾ | **100 %** | **100 %** | **100 %** | **100 %** | **100 %** |
| Creme 1 ²⁾ | **50 %** | **50 %** | **45%** | **40 %** | **30 %** |
| Shampoo ³⁾ | **0 %** | **0 %** | **0%** | **0 %** | **0 %** |
| Creme 2 ⁴⁾ | **90 %** | **90 %** | **90%** | **85 %** | **80 %** |

| | | | | | |
|---|---|---|---|---|---|
| 1) Gelformulierung der folgenden Zusammensetzung nach INCI: Wasser, Sorbeth-30, Polysorbat, Carbomer, Konservierungsmittel; 2) Marktübliche Cremeformulierung; 3) Marktübliche Shampooformulierung; 4) Cremeformulierung der folgenden Zusammensetzung nach INCI: Wasser, hydriertes Jojobaöl, Steareth-2, Glycerin, PPG-15 Stearylether, hydriertes Canolaöl, Dioctyladipat, Steareth-21, Dicaprylylether, Shea-Butter, Cyclomethicon, Polyacrylamid, C13-14-Isoparaffin, Laureth-7, Xanthan, Natriumhyaluronat, Konservierungsmittel | | | | | |

## Patentansprüche

1. Verfahren zur Untersuchung von Lipidvesikeln oder Liposomen in einem Testmedium unter Anwendung der Elektronenspinresonanz-(ESR)-Spektroskopie, bei dem man
a) die zu untersuchenden Lipidvesikel/Liposomen mit einer ESR-aktiven Sonde markiert und
b) eine Probe herstellt, indem man eine Menge der markierten Lipidvesikel/Liposomen in das Testmedium einbringt,
**dadurch gekennzeichnet, daß** man zur quantitativen Bestimmung der morphologischen Unversehrtheit und Intaktheit der Membran der Lipidvesikel/Liposomen den prozentualen Anteil der unversehrten bzw. intakten Lipidvesikel/Liposomen in dem Testmedium bestimmt, indem man
c) eine Positivkontrolle herstellt, indem man eine Menge der markierten Lipidvesikel/Liposomen in ein Kontrollmedium einbringt, wobei man bei der Positivkontrolle davon ausgeht, daß bei ihr 100% der Lipidvesikel bzw. Liposomen intakt sind,
d) eine Negativkontrolle herstellt, indem man eine Menge der ESR-aktiven Sonde in das Testmedium einbringt,
e) ESR-Spektren von Probe, Positivkontrolle und Negativkontrolle aufnimmt und
f) die aufgenommenen ESR-Spektren miteinander vergleicht, wobei man
i) aus den Spektren von Probe und Positivkontrolle und aus den Spektren von Probe und Negativkontrolle Differenzspektren bildet und/oder
ii) ein simuliertes Spektrum berechnet, indem man einen prozentualen Anteil der Werte des Spektrums der Positivkontrolle und einen prozentualen Anteil der Werte des Spektrums der Negativkontrolle unter Erhalt des simulierten Spektrums addiert, wobei die prozentualen Anteile zusammen 100% ergeben, und das simulierte Spektrum mit dem experimentellen Spektrum der Probe vergleicht.

2. Verfahren nach Anspruch 1, **dadurch gekennzeichnet, daß** die ESR-aktive Sonde ein Phospholipid ist, welches einen mit einer Doxylgruppe (2,2-disubstituierte 4,4-Dimethyl-3-oxazolidinyloxy-Gruppe) substituierten Fettsäurerest aufweist.

3. Verfahren nach einem der Ansprüche 1 oder 2, **dadurch gekennzeichnet, daß** die ESR-aktive Sonde ausgewählt ist unter
a) 1-Palmitoyl-2-(n-doxyl)-stearoyl-glycero-3-phosphocholin, wobei n = 5, 7, 10, 12, 14 oder 16, vorzugsweise n = 5 ist,
b) Doxyl-5-Cholesterol oder einem Methylester davon und
c) n-Doxyl-Fettsäuren oder einem Methylester davon, wobei vorzugsweise n = 5 oder 16 ist.

4. Verfahren nach einem der Ansprüche 1 bis 3, **dadurch gekennzeichnet, daß** der Anteil der Lipidvesikel/Liposomen, die morphologisch unversehrt bzw. intakt sind, im Medium der Positivkontrolle 100% beträgt.

5. Verfahren nach einem der Ansprüche 1 bis 4, **dadurch gekennzeichnet, daß** das Medium der Positivkontrolle ein wäßriges Medium, vorzugsweise Wasser ist.

6. Verfahren nach einem der Ansprüche 1 bis 5, wobei man das simulierte Spektrum mit dem experimentellen Spektrum der Probe vergleicht, indem man das Differenzspektrum durch Subtraktion der Spektren bildet.

7. Verfahren nach einem der Ansprüche 1 bis 6, wobei man die jeweiligen prozentualen Anteile variiert, bis das simulierte Spektrum mit dem experimentellen Spektrum der Probe im wesentlichen übereinstimmt bzw. das durch Subtraktion gebildete Differenzspektrum im wesentlichen eine Basislinie darstellt.

8. Verfahren nach einem der Ansprüche 1 bis 7, wobei das Testmedium unter Flüssigkeiten und Gelen, vorzugsweise unter kosmetischen oder pharmazeutischen Fertigformulierungen, besonders bevorzugt unter Öl-in-Wasser-Emulsionen, Wasser-in-Öl-Emulsionen, Hydrogelen, Salben, Pasten, Cremes und Lotionen ausgewählt ist.

## Claims

1. A method for assaying lipid vesicles or liposomes in a test medium using electron spin resonance (ESR) spectroscopy, in which:
a) the lipid vesicles/liposomes that are to be assayed are labelled with an ESR-active probe; and
b) a sample is produced by introducing a quantity of the labelled lipid vesicles/liposomes into the test medium;
**characterized in that,** to quantitatively determine the morphological integrity and intactness of the membrane of the lipid vesicles or liposomes, the percentage of undamaged or intact lipid vesicles/liposomes in the test medium is determined, wherein:
c) a positive control is produced by introducing a quantity of the labelled lipid vesicles/liposomes into a control medium, wherein for the positive control it is assumed that 100% of the lipid vesicles and/or liposomes therein are intact;
d) a negative control is produced by introducing a quantity of the ESR-active probe into the test medium;
e) ESR spectra of the sample, the positive control and the negative control are recorded; and
f) the recorded ESR spectra are compared with each other, wherein:
i) difference spectra are produced using the spectra of the sample and the positive control and the spectra of the sample and the negative control; and/or
ii) a simulated spectrum is computed in which a percentage contribution of the spectrum of the positive control and a percentage contribution of the spectrum of the negative control are added to produce the simulated spectrum, wherein the percentage contributions together add up to 100%, and the simulated spectrum is compared with the experimental spectrum of the sample.

2. A method according to claim 1, **characterized in that** the ESR-active probe is a phospholipid which has a fatty acid residue substituted with a doxyl group (2,2-disubstituted 4,4-dimethyl-3-oxazolidinyloxy group).

3. A method according to claim 1 or claim 2, **characterized in that** the ESR-active probe is selected from:
a) 1-palmitoyl-2-(n-doxyl)-stearoyl-glycero-3-phosphocholine, wherein n = 5, 7, 10, 12, 14 or 16, and preferably n = 5;
b) doxyl-5-cholesterol or a methyl ester thereof; and
c) n-doxyl fatty acids or a methyl ester thereof, wherein preferably n = 5 or 16.

4. A method according to one of claims 1 to 3, **characterized in that** the fraction of lipid vesicles/liposomes which are morphologically undamaged or intact is 100% in the positive control medium.

5. A method according to one of claims 1 to 4, **characterized in that** the medium for the positive control is an aqueous medium, preferably water.

6. A method according to one of claims 1 to 5, in which the simulated spectrum is compared with the experimental spectrum of the sample, wherein the difference spectrum is formed by subtraction of the spectra.

7. A method according to one of claims 1 to 6, in which the percentage contributions are varied until the simulated spectrum substantially agrees with the experimental spectrum of the sample or the difference spectrum produced by subtraction substantially forms a base line.

8. A method according to one of claims 1 to 7, in which the test medium is selected from liquids and gels, preferably cosmetic or pharmaceutical preparations, particularly preferably oil-in-water emulsions, water-in-oil emulsions, hydrogels, ointments, pastes, creams and lotions.

## Revendications

1. Procédé d'analyse de vésicules lipidiques ou de liposomes dans un milieu d'essai en utilisant la spectroscopie de résonance paramagnétique (RPE), dans lequel :
a) on marque les vésicules lipidiques/liposomes à analyser avec une sonde active RPE et
b) on crée un échantillon en introduisant une quantité de vésicules lipidiques/liposomes marqués dans le milieu d'essai,
**caractérisé en ce que,** pour analyser l'intégrité morphologique de la membrane des vésicules lipidiques/liposomes, on détermine le pourcentage des vésicules lipidiques/liposomes intacts dans le milieu d'essai,
c) en créant un contrôle positif, en introduisant une quantité de vésicules lipidiques/liposomes marqués dans un milieu de contrôle, sachant que pour le contrôle positif on part du fait que 100% de ses vésicules lipidiques et/ou liposomes sont intacts,
d) en créant un contrôle négatif, en introduisant une quantité de la sonde active RPE dans le milieu d'essai et
e) en enregistrant les spectres RPE de l'échantillon, du contrôle positif et du contrôle négatif et
f) en comparant les spectres RPE enregistrés les uns aux autres, sachant qu'on
i) qu'on forme des spectres différentiels à partir des spectres de l'échantillon et du contrôle positif et à partir des spectres de l'échantillon et du contrôle négatif et/ou
ii) qu'on calcule un spectre simulé, en ajoutant un pourcentage des valeurs du spectre du contrôle positif et un pourcentage des valeurs du spectre du contrôle négatif en conservant le spectre simulé, les pourcentages produisant un total de 100%, et en comparant le spectre simulé au spectre expérimental de l'échantillon.

2. Procédé selon la revendication 1, **caractérisé en ce que** la sonde active RPE est un phospholipide, lequel comprend un résidu d'acide gras substitué par un groupe doxyle (groupe 2,2-disubstitué 4,4-diméthyle-3-oxazolidinyloxy).

3. Procédé selon la revendication 1 ou 2, **caractérisé en ce que** la sonde active RPE est sélectionnée parmi :
a) la 1-palmitoyle-2-(n-doxyle)stéaroyle-glycéro-3-phosphocholine, sachant que n = 5, 7, 10, 12, 14 ou 16, de préférence n = 5,
b) le doxyle-5-cholestérol ou son ester méthylique et
c) les acides gras n-doxyle ou leur ester méthylique, sachant que de préférence n = 5 ou 16.

4. Procédé selon l'une quelconque des revendications 1 à 3, **caractérisé en ce que** le pourcentage de vésicules lipidiques/liposomes qui ont gardé leur intégrité morphologique dans le milieu du contrôle positif s'élève à 100.

5. Procédé selon l'une quelconque des revendications 1 à 4, **caractérisé en ce que** le milieu du contrôle positif est un milieu aqueux, de préférence de l'eau.

6. Procédé selon l'une quelconque des revendications 1 à 5, sachant qu'on compare le spectre simulé au spectre expérimental de l'échantillon en formant le spectre différentiel par soustraction des spectres.

7. Procédé selon l'une quelconque des revendications 1 à 6, sachant qu'on modifie les pourcentages respectifs jusqu'à ce que le spectre simulé concorde sensiblement avec le spectre expérimental de la sonde et/ou que le spectre différentiel formé par soustraction représente sensiblement une ligne de base.

8. Procédé selon l'une quelconque des revendications 1 à 7, le milieu d'essai étant sélectionné parmi des liquides et des gels, de préférence parmi des formulations cosmétiques ou pharmaceutiques prêtes à l'emploi, de manière particulièrement préférée parmi des émulsions huile dans l'eau, des émulsions eau dans l'huile, des hydrogènes, des pommades, des crèmes et des lotions.
